# FASCICULE DE BREVET EUROPEEN

(11) **EP 2 322 413 B1**
(45) Date de publication et mention de la délivrance du brevet: **21.03.2012**
(21) Numéro de dépôt: 10306217.0
(22) Date de dépôt: 08.11.2010
(51) Int. Cl.: B62D 25/08, B62D 35/00, B60K 11/08

(54) **Poutre transversale avant de véhicule automobile comprenant un élément de carénage arrière**
Vorderer Querträger eines Kraftfahrzeugs, der ein rückwärtiges Verkleidungselement umfasst
Front crossbeam of an automobile including a rear fairing element

(30) Priorité: 12.11.2009 FR 0957967
(43) Date de publication de la demande: 18.05.2011
(73) Titulaire: Faurecia Bloc Avant, 92000 Nanterre (FR)
(72) Inventeur: Gonin, Vincent, 37540 Saint Cyr sur Loire (FR)
(74) Mandataire: Blot, Philippe Robert Emile

(56) Documents cités:
- EP-A1- 0 050 745
- WO-A1-2004/087487
- WO-A1-2009/121446
- DE-A1-102007 019 481

## Description

La présente invention concerne une poutre transversale avant de véhicule automobile, du type à être disposée entre une peau de bouclier et une face arrière d'un ensemble avant de véhicule automobile, ladite poutre étant agencée pour se déformer en absorbant de l'énergie en cas de choc contre la peau de bouclier, ladite poutre présentant une face avant sensiblement plane. Des telles poutres sont connues des documents WO 2004/087487 A1 et DE 10 2007 019481 A1.

L'invention concerne également un ensemble avant de véhicule automobile comprenant une telle poutre transversale avant.

Une poutre avant de véhicule automobile a pour fonction de protéger le véhicule automobile contre l'intrusion d'éléments rigides externes, tels qu'un poteau ou un autre véhicule, vers l'intérieur de la caisse du véhicule en cas de choc contre l'avant du véhicule et ainsi protéger les occupants du véhicule et les éléments fonctionnels disposés dans la partie avant du véhicule. Une telle poutre permet également d'assurer la protection des piétons en cas de collision entre le véhicule et un piéton en prévoyant un élément d'absorption de l'énergie due à un choc entre la poutre et l'avant du véhicule.

Une telle poutre est disposée devant une face arrière du véhicule automobile regroupant des éléments fonctionnels du véhicule tels que des organes fonctionnels d'un système de refroidissement du groupe motopropulseur du véhicule et/ou d'un système de climatisation, tel qu'un ou plusieurs radiateur ou un groupe motoventilateur. Ces organes fonctionnent en récupérant de l'air provenant de l'extérieur du véhicule lorsque le véhicule est en circulation. De plus, l'air récupéré permet le refroidissement de différents éléments fonctionnels du véhicule.

Il est connu d'agencer la face avant externe du véhicule automobile afin d'optimiser l'aérodynamisme du véhicule et améliorer ses performances de résistance à l'air tout en prévoyant des entrées d'air permettant de récupérer l'air nécessaire au fonctionnement des organes fonctionnels décrits ci-dessus.

Cependant, la poutre avant présente généralement une section de forme rectangulaire, ce qui ne favorise pas un bon écoulement de l'air à l'intérieur de l'ensemble avant du véhicule. Ainsi, tandis qu'un important travail a été effectué pour améliorer l'écoulement de l'air à l'extérieur du véhicule, rien n'est prévu pour optimiser cet écoulement à l'intérieur du véhicule.

L'un des buts de l'invention est de pallier cet inconvénient en proposant une poutre avant de véhicule automobile permettant d'améliorer l'écoulement d'air à l'intérieur du véhicule et ainsi améliorer l'efficacité de la récupération d'air et le refroidissement des organes fonctionnels du véhicule.

A cet effet, l'invention concerne une poutre transversale avant du type décrit ci-dessus, ladite poutre comprenant :
- un élément de carénage arrière présentant une concavité tournée vers l'avant du véhicule de façon à favoriser un écoulement laminaire de l'air depuis la face avant de la poutre vers la face arrière de l'ensemble avant du véhicule automobile.

Une telle poutre avant permet de réduire les turbulences dans l'écoulement d'air crées par la poutre, ce qui améliore le refroidissement offert par l'air récupéré au cours de la circulation du véhicule. Une telle amélioration permet de réduire la surface des entrées d'air à l'avant du véhicule, offrant ainsi la possibilité d'améliorer encore les performances aérodynamiques du véhicule automobile, ce qui mène à des gains énergétiques.

Selon d'autres caractéristiques de la poutre transversale avant :
- l'élément de carénage est une pièce distincte de la poutre transversale avant, l'élément de carénage et la poutre comprenant des moyens de fixation réciproques ;
- la poutre comprend au moins une patte s'encliquetant dans au moins une fente de l'élément de carénage ;
- l'élément de carénage est formé par un profilé en matériau plastique, ledit profilé étant agencé pour se plier sur lui-même afin de former l'élément de carénage de section fermée ;
- l'élément de carénage comprend au moins une languette reliée au profilé par une charnière de pliage, ladite languette se pliant vers le reste du profilé de sorte à former la concavité ;
- l'élément de carénage comprend deux languettes, chaque languette étant reliée au profilé par une charnière de pliage, les languettes étant pliées l'une vers l'autre pour former la concavité, chaque languette étant pourvue de moyens de fixation à l'autre languette ;
- l'élément de carénage est venu de matière avec la poutre transversale avant ;
- la poutre comprend un élément souple d'absorption de l'énergie due à un choc, ledit élément étant disposé entre la face avant de la poutre transversale et l'élément de carénage ;
- la concavité présente une forme arrondie ou en goutte d'eau ou en forme de V.

L'invention concerne également un ensemble avant de véhicule automobile comprenant au moins une peau de bouclier et une face arrière comprenant des éléments fonctionnels du véhicule automobile disposée en arrière de la peau de bouclier et dans lequel une poutre transversale avant telle que décrite ci-dessus est disposée entre la peau de bouclier et la face arrière.

Selon une autre caractéristique de l'ensemble avant la poutre transversale avant et la peau de bouclier comprennent des moyens de fixation réciproques.

D'autres aspects et avantages de l'invention apparaîtront à la lecture de la description qui suit, donnée à titre d'exemple et faite en référence aux dessins annexés, dans lesquels :
- la figure 1 est une représentation schématique en coupe d'un ensemble avant selon l'invention comprenant une poutre transversale avant selon un premier mode de réalisation de l'invention
- la figure 2 est une représentation schématique en coupe d'une poutre transversale avant selon un deuxième mode de réalisation de l'invention,
- la figure 3 est une représentation schématique en coupe d'un profilé permettant de réaliser un élément de carénage d'une poutre transversale avant selon l'invention,
- la figure 4 montre plusieurs sections en coupe d'éléments de carénage selon des variantes de réalisation d'une poutre transversale avant selon l'invention.

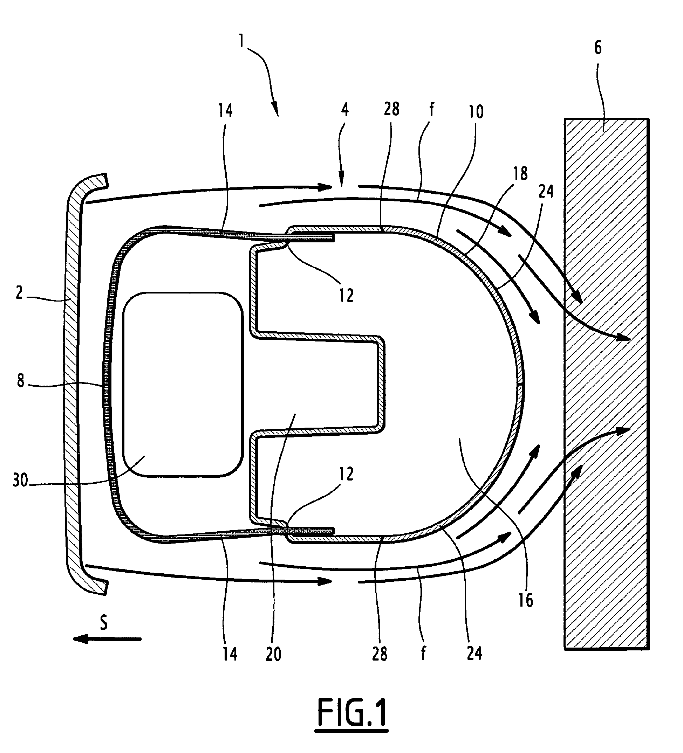

Par la suite, les termes d'orientation, tels que « longitudinal », « transversal », « avant », « arrière », « au-dessus », « en dessous », etc. s'entendent par référence à l'orientation usuelle des véhicules automobiles, illustrée sur la figure 1 par la flèches S dirigée horizontalement vers l'avant suivant une direction longitudinale du véhicule automobile.

En référence à la figure 1, on décrit un ensemble avant 1 de véhicule automobile comprenant de l'avant vers l'arrière, une peau de bouclier 2, une poutre transversale avant 4 et une face arrière 6 regroupant des éléments fonctionnels du véhicule automobile (non représentés). La peau de bouclier 2 et la face arrière 6 sont des éléments usuels d'un véhicule automobile et ne seront pas décrits en détail.

La poutre transversale avant 4 est destinée à s'étendre selon une direction transversale entre la peau de bouclier 2 et la face arrière 6 de façon connue et classique. La poutre transversale avant 4 présente une face avant 8 disposée en regard de la peau de bouclier 2 et un élément de carénage arrière 10 s'étendant, selon la direction longitudinale, en arrière de la face avant 8 de la poutre 4 et en regard de la face arrière 6. L'élément de carénage 10 s'étend selon la direction transversale sensiblement sur toute la longueur de la poutre transversale avant 4.

Selon les modes de réalisation représenté sur les figures, l'élément de carénage 10 est une pièce distincte de la poutre transversale avant 4 et est fixé à celle-ci par des moyens de fixation 12 (décrits ultérieurement). Selon ces modes de réalisation, la poutre transversale 4 est par exemple réalisée en métal de façon classique. Selon une variante, la poutre transversale 4 est réalisée en matériau plastique. Selon encore un autre mode de réalisation, la poutre transversale 4 est réalisée en matériau plastique et l'élément de carénage 12 est venu de matière avec ladite poutre 4.

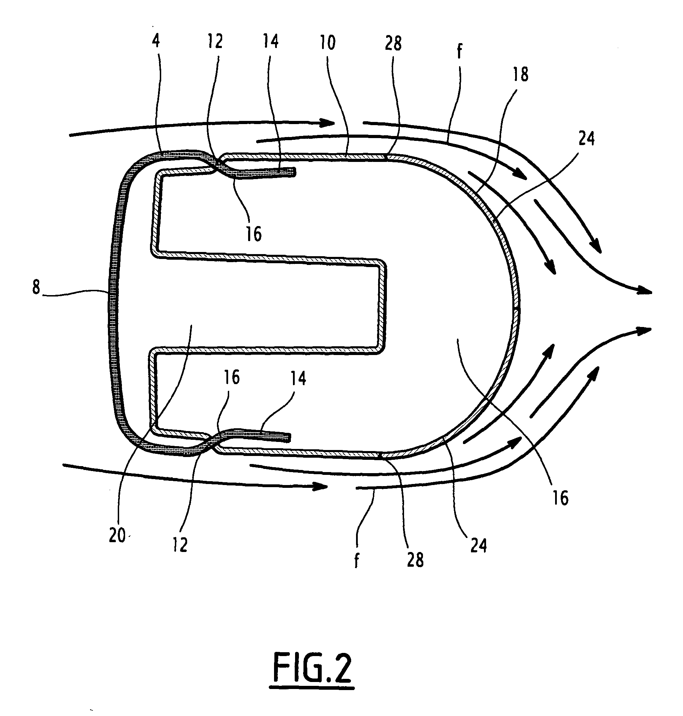

Selon les modes de réalisation représenté sur les figures, la poutre transversale avant 4 présente une section en forme de U ouverte vers l'arrière, de sorte que la face avant 8 est sensiblement plane. Les branches du U de la poutre 4 forment des pattes 14, qui sont introduites dans des fentes 12 de l'élément de carénage 10 de sorte à assurer la fixation de l'élément de carénage 10 à la poutre 4, les pattes 14 et les fentes 12 formant des moyens de fixation réciproques de l'élément de carénage 10 sur la poutre 4. Selon le mode de réalisation représenté sur la figure 2, les pattes 14 présentent un chacune un décrochement 16 rapprochant les pattes l'une de l'autre de sorte à former un moyen de blocage des pattes 14 dans les fentes 12 de l'élément de carénage 10.

Selon une variante non représentée, la poutre transversale 4 présente une section fermée et l'élément de carénage 10 est fixé à ladite poutre par d'autres moyens de fixation, tels qu'un soudage, un collage, des logements prévus dans la poutre ou autre.

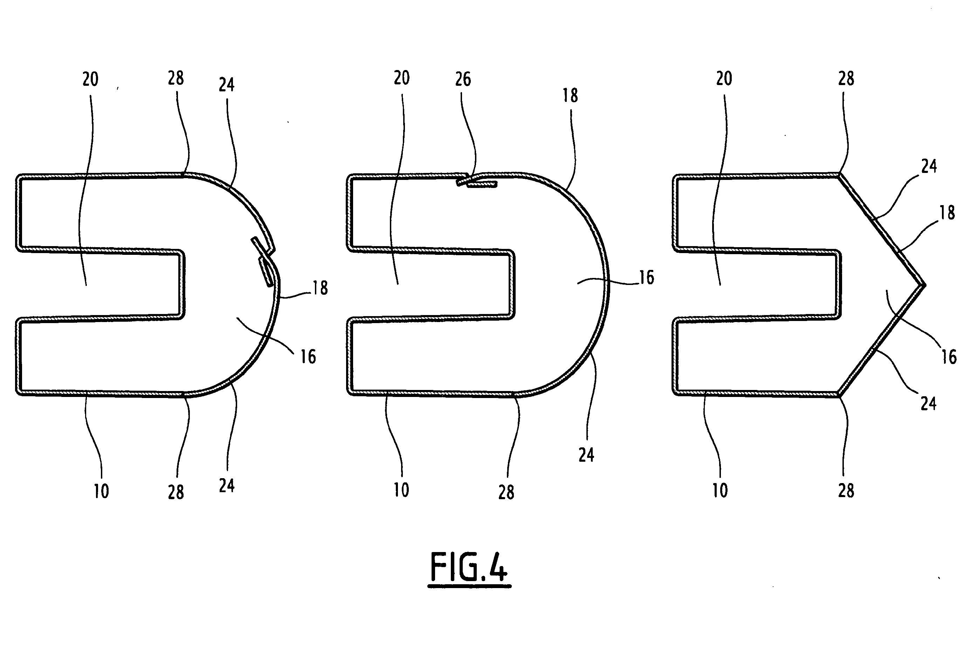

L'élément de carénage 10 comprend une concavité 16 tournée vers l'avant du véhicule, ce qui confère à l'élément de carénage 10 une forme favorisant un écoulement laminaire de l'air depuis la face avant 8 de la poutre 4 vers la face arrière 6 du véhicule automobile, comme représenté par les flèches f des figures 1 et 2. En effet, la concavité 16 permet de conférer à la face extérieure 18 de l'élément de carénage 10 une forme profilée vers l'arrière favorisant un écoulement de l'air vers la face arrière 6 du véhicule sans turbulences. La concavité 16 peut présenter toute forme adaptée à l'amélioration de l'écoulement de l'air à l'intérieur de l'ensemble avant 1. Ainsi, à titre d'exemple, on a représenté sur la figure 4 des modes de réalisation de l'élément de carénage 10 dans lequel la concavité présente une forme arrondie en arc de cercle, en goutte d'eau ou encore en forme de V (ou forme de chevron). D'autres formes de concavités peuvent être envisagées.

Lorsqu'il est réalisé par une pièce séparée du reste de la poutre transversale avant 4, l'élément de carénage comprend un évidement 20 en regard de la face avant 8 de la poutre transversale 4. Un tel évidement confère une meilleure inertie en flexion selon une direction longitudinale à la poutre, ce qui améliore le comportement de celle-ci en cas d'intrusion d'un élément externe dans l'ensemble avant. Un tel évidement 20 permet en outre de favoriser un écrasement de l'élément de carénage 10 en cas de déformation de la poutre transversale avant 4 en cas de choc frontal contre le véhicule automobile, ce qui améliore les propriétés d'absorption de l'énergie de la poutre transversale avant 4

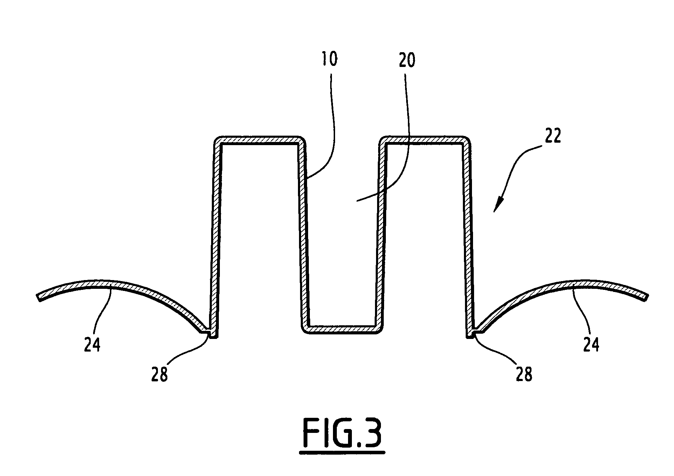

Avantageusement, l'élément de carénage 10 est formé par un profilé ouvert 22 pouvant être réalisé d'une seule pièce, comme représenté sur la figure 3. Un tel profilé comprend au moins une languette 24 susceptible d'être repliée sur le profilé 22 de sorte à former l'élément de carénage 10 de section fermée. A cet effet, la languette 24 et le reste du profilé sont munis de moyens de fixation 26 réciproques, tels qu'une patte introduite dans une fente (voir la figure 4). Alternativement, la languette 24 peut être soudée au reste du profilé une fois qu'elle a été repliée. Afin de permettre le pliage de la languette 24, celle-ci est reliée au reste du profilé par une charnière de pliage 28, par exemple obtenue par un affaiblissement de matière, comme représenté sur la figure 3. Ainsi, le profilé 22 peut être obtenu de façon très simple et économique.

Selon le mode de réalisation représenté sur les figures 1 à 3 et sur une partie de la figure 4, le profilé 22 comprend deux languettes 24 reliées chacune au profilé 22 par une charnière de pliage 28. Les languettes 24 sont pliées l'une vers l'autre pour former la concavité 16 et sont fixées l'une à l'autre par des moyens de fixation réciproques (patte introduite dans une fente) ou par soudage par exemple.

Selon un autre mode de réalisation, l'élément de carénage 10 est réalisé en deux profilés complémentaires fixés l'un à l'autre par soudage ou par bouterollage ou encliquetage par exemple.

Selon le mode de réalisation représenté sur la figure 1, la poutre transversale avant 4 comprend en outre un élément 30 souple d'absorption de l'énergie due à un choc. Cet élément 30 est disposé entre la face avant 8 de la poutre 4 et l'élément de carénage 10 et permet d'assurer la protection des piétons en cas de choc contre la peau de bouclier de façon connue. Lorsque la poutre transversale 4 est réalisée en matériau métallique, l'élément d'absorption 30 est un élément distinct, par exemple réalisé en mousse expansée ou en matériau plastique injecté. Lorsque la poutre transversale 4 est réalisée en un matériau plastique, l'élément d'absorption 30 peut être venu de matière avec ladite poutre 4 sous la forme d'un réseau de nervures par exemple. Un tel élément d'absorption 30 est connu et ne sera pas décrit plus en détail ici.

La poutre transversale avant 4 décrite ci-dessus est par exemple un élément indépendant fixé à la peau de bouclier 2 par des moyens de fixation réciproques de tout type adapté, par exemple des moyens d'encliquetage, des agrafes ou des languettes de fixation. Ces moyens de fixation sont adaptés pour maintenir la poutre transversale 4 en position fixe par rapport à la peau et pour générer peu de nuisances sonores. Ces moyens de fixation permettent d'assurer une continuité carrosserie / bloc moteur en terme d'écoulement de l'air à l'intérieur de l'ensemble avant 1. L'encombrement vertical de la poutre transversale 4 peut être sensiblement identique à celui de la peau de bouclier 2, c'est-à-dire que la peau de bouclier 2 est agencée pour se conformer à la forme de la poutre transversale 4 comme représenté sur la figure 1.

Selon une variante non représentée, la poutre transversale 4 est intégrée à un bouclier avant de véhicule automobile et est réalisée d'une seule pièce avec ce bouclier. Un tel bouclier est par exemple formé de façon connue d'un cadre formé d'une seule pièce comprenant une poutre supérieure et une poutre inférieure destinées à être disposées en regard d'une voie haute et d'une voie basse formées par des longerons de la caisse du véhicule automobile, les poutres supérieure et inférieure étant reliées par des jambages s'étendant en hauteur et agencés pour absorber de l'énergie en cas de choc frontal contre le véhicule. La poutre supérieure et/ou la poutre inférieure sont alors des poutres transversales 4 telles que décrites ci-dessus.

La poutre transversale décrite ci-dessus permet d'optimiser l'écoulement d'air dans l'ensemble avant 1 de façon simple et économique en réduisant les turbulences créées par la poutre transversale avant. En effet, la forme de l'élément de carénage 10 permet de favoriser un écoulement laminaire de l'air autour de la poutre et d'orienter de façon optimale l'air vers la face arrière 6 de l'ensemble avant 1, comme représenté par les flèches f des figures 1 et 2.

## Revendications

1. Poutre transversale avant (4) de véhicule automobile destinée à être disposée entre une peau de bouclier (2) et une face arrière (6) d'un ensemble avant (1) de véhicule automobile, ladite poutre (4) étant agencée pour se déformer en absorbant de l'énergie en cas de choc contre la peau de bouclier (2), ladite poutre (4) présentant une face avant (8) sensiblement plane, **caractérisée en ce que** la poutre (4) comprend un élément de carénage arrière (10) présentant une concavité (16) tournée vers l'avant du véhicule de façon à favoriser un écoulement laminaire de l'air depuis la face avant (8) de la poutre (4) vers la face arrière (6) de l'ensemble avant (1) du véhicule automobile.

2. Poutre transversale selon la revendication 1, **caractérisée en ce que** l'élément de carénage (10) est une pièce distincte de la poutre transversale avant (4), l'élément de carénage (10) et la poutre (4) comprenant des moyens de fixation réciproques (12, 14).

3. Poutre transversale selon la revendication 2, **caractérisée en ce que** la poutre (4) comprend au moins une patte (14) s'encliquetant dans au moins une fente (12) de l'élément de carénage (10).

4. Poutre transversale selon la revendication 2 ou 3, **caractérisée en ce que** l'élément de carénage (10) est formé par un profilé (22) en matériau plastique, ledit profilé (22) étant agencé pour se plier sur lui-même afin de former l'élément de carénage (10) de section fermée.

5. Poutre transversale selon la revendication 4, **caractérisée en ce que** l'élément de carénage (10) comprend au moins une languette (24) reliée au profilé par une charnière de pliage (28), ladite languette (24) se pliant vers le reste du profilé (22) de sorte à former la concavité (16).

6. Poutre transversale selon la revendication 5, **caractérisée en ce que** l'élément de carénage (10) comprend deux languettes (24), chaque languette (24) étant reliée au profilé (22) par une charnière de pliage (28), les languettes (24) étant pliées l'une vers l'autre pour former la concavité (16), chaque languette (24) étant pourvue de moyens de fixation à l'autre languette (24).

7. Poutre transversale selon la revendication 1, **caractérisée en ce que** l'élément de carénage (10) est venu de matière avec la poutre transversale avant (4).

8. Poutre transversale selon l'une quelconque des revendications 1 à 7, **caractérisée en ce qu'**elle comprend un élément (30) souple d'absorption de l'énergie due à un choc, ledit élément (30) étant disposé entre la face avant (8) de la poutre transversale (4) et l'élément de carénage (10).

9. Poutre transversale selon l'une quelconque des revendications 1 à 8, **caractérisée en ce que** la concavité (16) présente une forme arrondie ou en goutte d'eau ou en forme de V.

10. Ensemble de face avant (1) de véhicule automobile comprenant au moins une peau de bouclier (2) et une face arrière (6), comprenant des éléments fonctionnels du véhicule automobile, disposée en arrière de la peau de bouclier (2), **caractérisé en ce qu'**au moins une poutre transversale (4) avant selon l'une quelconque des revendications 1 à 9 est disposée entre la peau de bouclier (2) et la face arrière (6).

11. Ensemble de face avant de véhicule automobile selon la revendication 10, **caractérisé en ce que** la poutre transversale avant (4) et la peau de bouclier (2) comprennent des moyens de fixation réciproques.

## Claims

1. Motor vehicle front transverse beam (4) intended to be located between a shield skin (2) and a rear face (6) of a motor vehicle front assembly (1), said beam (4) being designed to deform while absorbing energy in the event of an impact with the shield skin (2), said beam (4) having a substantially planar front face (8), **characterized in that** the beam (4) comprises a rear fairing element (10) having a concavity (16) turned toward the front of the vehicle so as to promote a laminar flow of air from the front face (8) of the beam (4) toward the rear face (6) of the front assembly (1) of the motor vehicle.

2. Transverse beam according to claim 1, **characterized in that** the fairing element (10) is a separate part from the front transverse beam (4), the fairing element (10) and the beam (4) comprising reciprocal securing means (12, 14).

3. Transverse beam according to claim 2, **characterized in that** the beam (4) comprises at least one tab (14) which snap-fastens into at least one slot (12) in the fairing element (10).

4. Transverse beam according to claim 2 or 3, **characterized in that** the fairing element (10) is formed by a plastic profiled element (22), said profiled element (22) being designed to bend in on itself in order to form the fairing element (10) of closed section.

5. Transverse beam according to claim 4, **characterized in that** the fairing element (10) comprises at least one tongue (24) connected to the profiled element by a bending hinge (28), said tongue (24) bending toward the rest of the profiled element (22) so as to form the concavity (16).

6. Transverse beam according to claim 5, **characterized in that** the fairing element (10) comprises two tongues (24), each tongue (24) being connected to the profiled element (22) by a bending hinge (28), the tongues (24) being bent toward one another in order to form the concavity (16), each tongue (24) being provided with means for securing to the other tongue (24).

7. Transverse beam according to claim 1, **characterized in that** the fairing element (10) is formed integrally with the front transverse beam (4).

8. Transverse beam according to any one of claims 1 to 7, **characterized in that** it comprises a flexible element (30) for absorbing energy resulting from an impact, said element (30) being located between the front face (8) of the transverse beam (4) and the fairing element (10).

9. Transverse beam according to any one of claims 1 to 8, **characterized in that** the concavity (16) has a rounded, teardrop or V shape.

10. Motor vehicle front face assembly (1) comprising at least one shield skin (2) and a rear face (6), comprising functional elements of the motor vehicle, located behind the shield skin (2), **characterized in that** at least one front transverse beam (4) according to any one of claims 1 to 9 is located between the shield skin (2) and the rear face (6).

11. Motor vehicle front face assembly according to claim 10, **characterized in that** the front transverse beam (4) and the shield skin (2) comprise reciprocal securing means.

## Patentansprüche

1. Vordere Querstrebe (4) für ein Kraftfahrzeug, die dazu bestimmt ist, zwischen einer Stoßfängerschale (2) und einer Rückwand (6) einer Frontpartie (1) eines Kraftfahrzeugs angeordnet zu werden, wobei die Strebe (4) dazu ausgelegt ist, dass sie sich im Fall eines Aufpralls gegen die Stoßfängerschale (2) unter Aufnahme der Energie verformt, und wobei die Strebe (4) eine im Wesentlichen plane Vorderseite (8) aufweist,
**dadurch gekennzeichnet,**
**dass** die Strebe (4) ein hinteres Verkleidungselement (10) mit einer zu der Fahrzeugvorderseite hin weisenden Konkavität (16) aufweist, so dass ein laminarer Luftstrom von der Vorderseite (8) der Strebe (4) zu der Rückwand (6) der Frontpartie (1) des Kraftfahrzeugs hin begünstigt wird.

2. Querstrebe nach Ansprach 1,
**dadurch gekennzeichnet,**
**dass** das Verkleidungselement (10) ein von der vorderen Querstrebe (4) separates Teil ist, wobei das Verkleidungselement (10) und die Strebe (4) Einrichtungen (12, 14) zur gegenseitigen Befestigung aufweisen.

3. Querstrebe nach Anspruch 2,
**dadurch gekennzeichnet,**
**dass** die Strebe (4) mindestens eine Lasche (14) aufweist, die in mindestens einen Schlitz (12) des Verkleidungselementes (10) einrastet.

4. Querstrebe nach Anspruch 2 oder 3,
**dadurch gekennzeichnet,**
**dass** das Verkleidungselement (10) aus einem Profil (22) aus Kunststoffmaterial gebildet ist, wobei das Profil (22) so ausgelegt ist, dass es auf sich selbst zurückgebogen ist, um das Verkleidungselement (10) mit einem geschlossenen Querschnitt zu bildern.

5. Querstrebe nach Anspruch 4,
**dadurch gekennzeichnet,**
**dass** das Verkleidungselement (10) mindestens eine Zunge (24) aufweist, die mit dem Profil durch ein Biegescharnier (28) verbunden ist, wobei die Zunge (24) derart auf das übrige Profil (22) hin gebogen ist, dass sie die Konkavität (16) bildet.

6. Querstrebe nach Anspruch 5,
**dadurch gekennzeichnet,**
**dass** das Verkleidungselement (10) zwei Zungen (24) aufweist, wobei jede Zunge (24) mit dem Profil (22) durch ein Biegescharnier (28) verbunden ist, wobei die Zungen (24) jeweils aufeinander zu gebogen sind, um die Konkavität (16) zu bilden, und wobei jede Zunge (24) mit Einrichtungen zur Befestigung an der anderen Zunge (24) versehen ist.

7. Querstrebe nach Anspruch 1,
**dadurch gekennzeichnet,**
**dass** das Verkleidungselement (10) einstückig mit der vorderen Querstrebe (4) ausgebildet ist.

8. Querstrebe nach einem der Ansprüche 1 bis 7,
**dadurch gekennzeichnet,**
**dass** sie ein nachgiebiges Element (30) zum Aufnehmen der Energie infolge eines Aufpralls aufweist, wobei das Element (30) zwischen der Vorderseite (8) der Querstrebe (4) und dem Veikleidungselement (10) angeordnet ist.

9. Querstrebe nach einem der Ansprüche 1 bis 8,
**dadurch gekennzeichnet,**
**dass** die Konkavität (16) eine gerundete Form oder eine Tropfenform oder eine V-form aufweist.

10. Baugruppe für eine Frontpartie (1) für ein Kraftfahrzeug, mit mindestens einer Stoßfängerschale (2) und einer hinter der Stoßfängerschale (2) angeordneten Rückwand (6), welche Funktionselemente des Kraftfahrzeugs aufweist,
**dadurch gekennzeichnet,**
**dass** mindestens eine vordere Querstrebe (4) nach einem der Ansprüche 1 bis 9 zwischen der Stoßfängerschale (2) und der Rückwand (6) angeordnet ist.

11. Baugruppe für eine Frontpartie für ein Kraftfahrzeug nach Anspruch 10,
**dadurch gekennzeichnet,**
**dass** die vordere Querstrebe (4) und die Stoßfängerschale (2) Einrichtungen zur gegenseitigen Befestigung aufweisen.
